# EUROPEAN PATENT SPECIFICATION

(11) **EP 3 072 760 B1**
(45) Date of publication and mention of the grant of the patent: **19.02.2020**
(21) Application number: 14863806.7
(22) Date of filing: 10.11.2014
(51) Int. Cl.: B60T 8/34, B60T 7/02, B60T 17/02, B60T 7/04

(54) **BRAKE APPARATUS**
BREMSVORRICHTUNG
DISPOSITIF DE FREIN

(30) Priority: 20.11.2013 JP 2013239478
(43) Date of publication of application: 28.09.2016
(73) Proprietor: Hitachi Automotive Systems, Ltd., Hitachinaka-shi, Ibaraki 312-8503 (JP)
(72) Inventor: MARUO, Ryohei, Atsugi-shi Kanagawa 243-8510 (JP); NAKAZAWA, Chiharu, Atsugi-shi Kanagawa 243-8510 (JP)
(74) Representative: Grünecker Patent- und Rechtsanwälte PartG mbB
(86) International application number: PCT/JP2014/079712
(87) International publication number: WO 2015/076133

(56) References cited:
- WO-A1-2011/120962
- DE-A1-102008 020 934
- DE-A1-102010 003 082
- DE-A1-102012 205 860
- DE-A1-102012 212 525
- JP-A- 2005 104 333
- JP-A- 2006 335 155
- JP-A- 2008 273 440

## Description

### TECHNICAL FIELD

The present invention relates to a vehicle control apparatus that applies a braking force to a vehicle.

### BACKGROUND ART

Conventionally, a motor vehicle brake system in accordance with DE 10 2012 205 860 A1 comprises a brake pedal, a master cylinder, a reservoir, a travel simulator, an electrically controllable pressure source, isolation valves pumps and a low-pressure accumulator, an inlet valve and an outlet valve for each wheel brake, valves connected to the pumps, and a control and regulation unit. Further, a travel detection device is provided which detects the actuation travel of the brake pedal or of at least one of the two pistons connected to the brake pedal.

Furthermore, there has been known a technique discussed in WO 2013/064651 A1 as a brake apparatus. In this patent literature, a sensor that detects a displacement amount of a piston in a master cylinder is mounted in the master cylinder as measures for detecting an amount of a brake operation performed by a driver.

### SUMMARY OF INVENTION

### TECHNICAL PROBLEM

However, the configuration like the technique discussed in WO 2013/064651 A1 has such a problem that, if the employed stroke sensor is configured to operate by utilizing a change in an inductance of a coil or an electromagnetic force of a magnetostrictive element, a Hall element, or the like as a principle for detecting the displacement amount of the piston, an electromagnetic noise around the stroke sensor makes it difficult to sufficiently acquire detection accuracy of the sensor. The present invention has been made in consideration of the above-described problem, and an object thereof is to provide a brake apparatus capable of highly accurately detecting a stroke amount of a brake pedal.

### SOLUTION TO PROBLEM

The above-described object is achieved according to the present invention by a brake apparatus having the features of claim 1.

A brake apparatus includes a master cylinder unit and a stroke sensor. The master cylinder unit includes therein a piston configured to carry out a stroke via a rod axially actuated according to an operation performed by a driver on a brake pedal, and an oil passage through which brake fluid flows after flowing out according to the stroke of the piston. The stroke sensor is attached to an outer wall of the master cylinder unit and configured to detect an axial stroke amount of the piston.

### ADVANTAGEOUS EFFECTS OF INVENTION

Therefore, the master cylinder unit and the stroke sensor are integrated with each other, which improves mountability of the brake apparatus onto a vehicle body. Further, the stroke sensor is attached to the outer wall of the master cylinder unit, which can increase layout flexibility to thus achieve a layout capable of preventing the noise, thereby acquiring the detection accuracy of the sensor.

### BRIEF DESCRIPTION OF DRAWINGS

Fig. 1 is a system diagram illustrating a configuration of a brake according to a first embodiment.
Fig. 2 is a perspective view of a brake apparatus according to the first embodiment.
Fig. 3 is a front view illustrating the brake apparatus according to the first embodiment.
Fig. 4 is a left side view illustrating the brake apparatus according to the first embodiment.
Fig. 5 is a cross-sectional view of the brake apparatus according to the first embodiment, taken along a line A-A.
Fig. 6 is a plan view illustrating the brake apparatus according to the first embodiment.
Fig. 7 is a cross-sectional view of the brake apparatus according to the first embodiment, taken along a line B-B.
Fig. 8 is a perspective view illustrating the brake apparatus according to the first embodiment with this brake apparatus mounted on a vehicle.
Fig. 9 is a perspective view illustrating a brake apparatus according to a second embodiment with this brake apparatus mounted on a vehicle.
Fig. 10 is a perspective view illustrating a modification of the second embodiment with a brake apparatus according thereto mounted on a vehicle.

### DESCRIPTION OF EMBODIMENTS

### [First Embodiment]

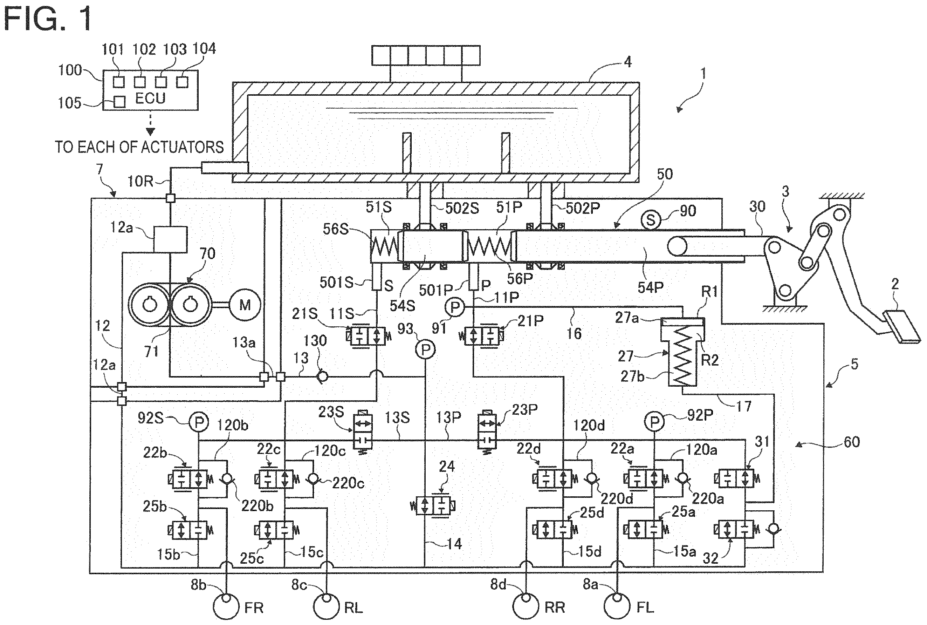

Fig. 1 schematically illustrates a configuration of a brake apparatus according to a first embodiment together with a hydraulic circuit. The brake apparatus 1 is a hydraulic brake apparatus applied to a brake system of an electric vehicle, such as a hybrid vehicle including an electric motor (a generator) besides an engine, and an electric vehicle including only the electric motor (the generator), as a prime mover that drives wheels. Such electric vehicles can carry out regenerative braking, which brakes the vehicle by converting a kinetic energy of the vehicle into electric energy with use of a regenerative braking apparatus including the motor (the generator). The brake apparatus 1 supplies brake fluid working as hydraulic fluid to a brake actuation unit mounted on each of wheels FL to RR of the vehicle to generate a brake hydraulic pressure (a wheel cylinder hydraulic pressure), thereby applying a hydraulic braking force to each of the wheels FL to RR.

The brake actuation unit including a wheel cylinder 8 is a so-called disk type brake device, and includes a brake disk and a caliper (a hydraulic brake caliper). The brake disk is a brake rotor that rotates integrally with a tire. The caliper includes a brake pad. The brake pad is disposed with a predetermined clearance (a space, or a gap due to loose mounting) generated between the brake pad and the brake disk, and generates the braking force by being displaced by the wheel cylinder hydraulic pressure into contact with the brake disk. The brake apparatus 1 includes two brake pipe systems (a primary P system and a secondary S system), and employs, for example, a so-called X-split pipe configuration. The brake apparatus 1 may employ another pipe method, such as a front/rear split pipe configuration. Hereinafter, when a component provided in correspondence with the P system and a component provided in correspondence with the S system should be distinguished from each other, indices P and S will be added at the ends of the respective reference numerals.

The brake apparatus 1 includes a brake pedal 2, a link mechanism 3, a reservoir tank (hereinafter referred to as a reservoir) 4, a master cylinder unit 5, and a pump unit 7. The brake pedal 2 serves as a brake operation member that receives an input of a brake operation performed by an operator (a driver). The link mechanism 3 makes variable a change rate of a brake operation force (a force of pressing the brake pedal 2) with respect to an amount by which the driver operates the brake pedal 2 (a pedal stroke). The reservoir 4 is a brake fluid source that stores the brake fluid, and is a low-pressure portion opened to an atmospheric pressure. The master cylinder unit 5 is connected to the brake pedal 2 via the link mechanism 3 and is replenished with the brake fluid from the reservoir 4, and generates a brake hydraulic pressure (a master cylinder pressure) by being actuated by the operation that the driver performs on the brake pedal 2. The pump unit 7 generates a hydraulic pressure by a motor M. The master cylinder unit 5 includes a master cylinder mechanism 50, a hydraulic control unit 60, and an electronic control unit (hereinafter referred to as an ECU) 100. The master cylinder mechanism 50 generates the master cylinder pressure by the operation performed on the brake pedal 2. The hydraulic control unit 60 receives a supply of the brake fluid from the reservoir 4 or the master cylinder mechanism 50, and includes a plurality of electromagnetic valves and the like for generating the brake hydraulic pressure independently of the brake operation performed by the driver. The ECU 100 controls actuation of this plurality of electromagnetic valves and the like, and the pump unit 7. Hereinafter, the various kinds of electromagnetic valves will be referred to as electromagnetic valves 20, when they are collectively referred to.

The brake apparatus 1 does not include an engine negative-pressure booster that boosts the brake operation force by utilizing an intake negative pressure generated by the engine of the vehicle. The link mechanism 3 is a pressing force amplification mechanism mounted between the brake pedal 2 and the master cylinder 5, and includes an input-side link member pivotally connected to the brake pedal 2 and an output-side link member pivotally connected to a push rod 30. The master cylinder mechanism 50 is a tandem-type master cylinder, and includes a primary piston 54P connected to the push rod 30 and a secondary piston 54S configured as a free piston, as master cylinder pistons axially displaceable according to the brake operation performed by the driver. The primary piston 54P is provided with a stroke sensor 90 that detects the pedal stroke. The details of the stroke sensor 90 will be described below.

The hydraulic control unit 60 is mounted between the wheel cylinders 8 and the master cylinder mechanism 50, and can individually supply the master cylinder pressure or a control hydraulic pressure to each of the wheel cylinders 8. The hydraulic control unit 60 includes a plurality of control valves as actuators for generating the control hydraulic pressure. The electromagnetic valves and the like perform an opening/closing operation according to a control signal, thereby controlling a flow of the brake fluid. The hydraulic control unit 60 includes a stroke simulator 27. The stroke simulator 27 is provided so as to be able to increase the pressures in the wheel cylinders 8 with use of the hydraulic pressure generated by the pump unit 7 with the master cylinder mechanism 50 and the wheel cylinders 8 out of communication with each other, and creates the pedal stroke by supply of the brake fluid from the master cylinder mechanism 50 according to the brake operation performed by the driver. Further, hydraulic sensors 91 to 93, which detect a discharge pressure of the pump unit 7 and the master cylinder pressure, are mounted in the master cylinder unit 5. The pump unit 7 is configured as a different unit from the master cylinder unit 5, and is connected to the master cylinder unit 5 and the reservoir 4 via pipes (a connection pipe 10R, a suction pipe 12a, and a discharge pipe 13a). The pump unit 7 sucks the brake fluid in the reservoir 4 and discharges the brake fluid toward the wheel cylinders 8 by being rotationally driven by the motor M. In the present embodiment, the pump unit 7 is embodied by an external gear pump (hereinafter referred to as a gear pump 70), which is excellent in terms of a noise and vibration performance and the like. The pump unit 7 is used in common by both of the systems, and is driven by the same motor M. The motor M can be embodied by, for example, a brushed motor.

Detection values transmitted from the stroke sensor 90 and the hydraulic sensors 91 to 93 and information regarding a running state transmitted from the vehicle are input to the ECU 100, and the ECU 100 controls each of the actuators in the hydraulic control unit 60 based on a program installed therein. More specifically, the ECU 100 controls the opening/closing operations of the electromagnetic valves that switch communication states of oil passages, and the number of times of rotation of the motor M that drives the pump unit 7 (i.e., the discharge amount of the pump unit 7). By this operation, the ECU 100 realizes boosting control for reducing a required brake operation force, anti-lock brake control (hereinafter referred to as ABS) for preventing or reducing a slip of a wheel that might be caused when the vehicle is braked, brake control for controlling a motion of the vehicle (vehicle dynamics control such as electronic stability control, which will be hereinafter referred to as VDC), automatic brake control such as adaptive cruise control, regenerative brake control that controls the wheel cylinder hydraulic pressure so as to achieve a target deceleration (a target braking force) by collaborating with the regenerative brake, and the like. During the boosting control, the ECU 100 drives the hydraulic control unit 60 to create a higher wheel cylinder hydraulic pressure than the master cylinder pressure with use of the discharge pressure of the pump unit 7 as a hydraulic source, thereby generating a hydraulic braking force by which the brake operation force input by the driver is insufficient, when the driver performs the brake operation. This control allows the brake apparatus 1 to exert a boosting function that assists the brake operation. In other words, the ECU 100 is provided so as to allow the brake apparatus 1 to assist the brake operation force by actuating the hydraulic control unit 60 and the pump unit 7 instead of not including the engine negative-pressure booster. During the regenerative brake control, the ECU 100 generates a hydraulic braking force by which a regenerative braking force generated by the regenerative braking apparatus is insufficient to, for example, generate a braking force requested by the driver.

The master cylinder mechanism 50 is a first hydraulic source connected to the wheel cylinders 8 via a first oil passages 11, which will be described below, and capable of increasing the wheel cylinder hydraulic pressures. The master cylinder mechanism 50 can increase the pressures in wheel cylinders 8a and 8d via an oil passage (a first oil passage 11P) in the P system with use of a master cylinder pressure generated in a first fluid chamber 51P, and can also increase the pressures in wheel cylinders 8b and 8c via a first oil passage 11S in the S system with use of a master cylinder pressure generated in a second fluid chamber 51S. The pistons 54P and 54S in the master cylinder mechanism 50 are inserted axially displaceably along an inner peripheral surface of a bottomed cylindrical cylinder. The cylinder includes a discharge port (a supply port) 501 and a replenishment port 502 for each of the P and S systems. The discharge port 501 is provided so as to be connectable to the hydraulic control unit 60 to establish communication with the wheel cylinders 8. The replenishment port 502 is connected to the reservoir 4 and is in communication with the reservoir 4. A coil spring 56P as a return spring is mounted in the first fluid chamber 51P between the pistons 54P and 54S in a pressed and compressed state. A coil spring 56S is mounted in the second fluid chamber 51S between the piston 54S and an axial end of the cylinder in a pressed and compressed state. The discharge ports 501 are constantly opened to the first and second fluid chambers 51P and 51S.

In the following description, a brake hydraulic circuit of the master cylinder unit 5 will be described with reference to Fig. 1. Members corresponding to the individual wheels FL to RR will be distinguished from one another if necessary, by indices a to d added at the ends of reference numerals thereof, respectively. The hydraulic control unit 60 includes the first oil passages 11, normally opened shut-off valves 21, normally opened pressure-increase valves (hereinafter referred to as SOL/V INs) 22, a suction oil passage 12, a discharge oil passage 13, a check valve 130, a normally-opened communication valve 23P, a normally-closed communication valve 23S, a first pressure-reduction oil passage 14, a normally-closed pressure adjustment valve 24, second pressure-reduction oil passages 15, normally closed pressure-reduction valves 25, a first simulator oil passage 16, and a second simulator oil passage 17. The first oil passages 11 connect the discharge ports 501 (the first and second fluid chambers 51P and 51S) of the master cylinder mechanism 50 and the wheel cylinders 8 to each other. The shut-off valves 21 are provided in the first oil passages 11. The pressure-increase valves 22 are provided (in oil passages 11a to 11d) on one side of the hydraulic control unit 60 that is closer to the wheel cylinders 8 with respect to the shut-off valves 21 in the first oil passages 11 in correspondence with the wheels FL to RR, respectively. The suction oil passage 12 connects a fluid pool 12a provided at a suction portion of the pump unit 7 and the pressure-reduction oil passages 15, which will be described below, to each other. The discharge oil passage 13 connects portions in the first oil passages 11 between the shut-off valves 21 and the SOL/V INs 22, and a discharge portion 71 of the pump unit 7 to each other. The check valve 130 is provided in the discharge oil passage 13, and permits only a flow of the brake fluid from one side of the pump unit 7 where the discharge portion 71 is located to one side of the hydraulic control unit 60 where the first oil passages 11 are located. The communication valve 23P is provided in the discharge oil passage 13P connecting a downstream side of the check valve 130 and the first oil passage 11P in the P system to each other. The communication valve 23S is provided in a discharge oil passage 13S connecting the downstream side of the check valve 130 and the first oil passage 11S in the S system to each other. The first pressure-reduction oil passage 14 connects a portion in a discharge oil passage 13P between the check valve 130 and the communication valve 23P, and the suction oil passage 12. The pressure adjustment valve 24 serves as a first pressure-reduction valve provided in the first pressure-reduction oil passage 14. The second pressure-reduction oil passages 15 connect the one side of the hydraulic control unit 60 that is closer to the wheel cylinders 8 with respect to the SOL/V INs 22 in the first oil passages 11, and the suction oil passage 12 to each other. The pressure-reduction valves 25 serve as second pressure-reduction valves provided in the second pressure-reduction oil passages 15. The first simulator oil passage 16 serves as a branch oil passage branching off from the master cylinder side with respect to the shut-off valve 21P in the first oil passage 11P to be connected to a main chamber R1 of the stroke simulator 27. The second simulator oil passage 17 connects an auxiliary chamber (a backpressure chamber) R2 of the stroke simulator 27, and the suction oil passage 12 and the discharge oil passage 13 to each other via a stroke simulator IN valve 31 and a stroke simulator OUT valve 32.

In the pump unit 7, the fluid pool 12a is provided at a portion where the connection pipe 10R extending from the reservoir 4 is connected to the suction oil passage 12 of the pump unit 7. The discharge oil passages 13P and 13S form communication passages connecting the first oil passage 11P in the P system and the first oil passage 11S in the S system to each other. The pump unit 7 is connected to the wheel cylinders 8a to 8d via the above-described communication passages (the discharge oil passages 13P and 13S) and the first oil passages 11P and 11S, and serves as a second hydraulic source capable of increasing the wheel cylinder hydraulic pressures by discharging the brake fluid to the above-described communication passages (the discharge oil passages 13P and 13S). At least one of the shut-off valves 21, the SOL/V INs 22, the communication valve 23P, the pressure adjustment valve 24, or the pressure-reduction valves 25 of each of the systems (the SOL/V 22 and the pressure adjustment valve 24 in the present embodiment) is a proportional control valve, an opening degree of which is adjusted according to a current supplied to a solenoid. The other valves are ON/OFF valves, opening/closing of which is controlled to be switched between two values, i.e., switched to be either opened or closed. The above-described other valves can also be embodied by the proportional control valve.

The shut-off valves 21 are provided in the first oil passages 11P and 11S between the wheel cylinders 8 and a stroke simulator valve 26. Further, bypass oil passages 120 are provided in parallel with the first oil passages 11 by bypassing the SOL/V INs 22. Check valves 220 are provided in the bypass oil passages 120. The check valves 220 permit only a flow of the brake fluid from the one side closer to the wheel cylinders 8 to the other side closer to the master cylinder 5. The hydraulic sensor 91 is provided in the first simulator oil passage 16. The hydraulic sensor 91 detects a hydraulic pressure at this portion (a hydraulic pressure in the stroke simulator 27, and corresponds to the master cylinder pressure). The hydraulic sensors 92 are provided between the shut-off valves 21 and the SOL/V INs 22 in the first oil passages 11. The hydraulic sensors 92 detect hydraulic pressure at these portions (the wheel cylinder hydraulic pressures). The hydraulic sensor 93 is provided between the check valve 130 and the communication valve 23 in the discharge oil passage 13P. The hydraulic sensor 93 detects a hydraulic pressure at this portion (the discharge pressure of the pump).

The stroke simulator 27 includes a piston 27a and a spring 27b. The piston 27a is disposed axially displaceably in a chamber R while dividing an inside of the chamber R into two chambers (the main chamber R1 and the auxiliary chamber R2). The spring 27b is an elastic member mounted in the auxiliary chamber R2 in a pressed and compressed state, and constantly biasing the piston 27a toward one side where the main chamber R1 is located (in a direction for reducing a volume of the main chamber R1 and increasing a volume of the auxiliary chamber R2). When the stroke simulator IN valve 31 and the stroke simulator OUT valve are controlled in an opening direction and a closing direction, respectively, with the shut-off valves 21 controlled in opening directions, the brake system (the first oil passages 11) connecting the first and second fluid chambers 51P and 51S of the master cylinder 5 and the wheel cylinders 8 to each other creates the wheel cylinder hydraulic pressures by the master cylinder pressure generated with use of the force of pressing the pedal, thereby realizing pressing force brake (non-boosting control). On the other hand, when the stroke simulator valve IN valve 31 and the stroke simulator OUT valve 32 are controlled in a closing direction and an opening direction, respectively, with the shut-off valves 21 controlled in closing directions, the brake system connecting the reservoir 4 and the wheel cylinders 8 to each other (the suction oil passage 12, the discharge oil passage 13, and the like) forms a so-called brake-by-wire system that creates the wheel cylinder hydraulic pressures by the hydraulic pressure generated with use of the pump unit 7, thereby realizing the boosting control, the regenerative control, and the like.

When the shut-off valves 21 are controlled in the closing directions to block the communication between the master cylinder 5 and the wheel cylinders 8, at least the brake fluid flowing out from the master cylinder mechanism 50 (the first fluid chamber 51P) into the first oil passage 11P is introduced into the main chamber R1 via the first simulator oil passage 16, by which the stroke simulator 27 creates the pedal stroke. When the driver performs the brake operation (presses or releases the pressing of the brake pedal 2) with the shut-off valve 21P closed to block the communication between the master cylinder mechanism 50 and the wheel cylinders 8, and the stroke simulator OUT valve 32 opened to establish the communication between the master cylinder mechanism 50 and the stroke simulator 27, the stroke simulator 27 sucks and discharges the brake fluid from the master cylinder 5, thereby creating the pedal stroke. More specifically, when a hydraulic pressure (the master cylinder pressure) equal to or higher than a predetermined pressure is applied to a pressure-receiving surface of the piston 27a in the main chamber R1, the piston 27a is axially displaced toward the other side where the auxiliary chamber R2 is located while pressing and compressing the spring 27b, thereby increasing the volume of the main chamber R1. As a result, the brake fluid is introduced from the master cylinder 5 (the discharge port 501P) into the main chamber R1 via the oil passages (the first oil passage 11P and the first simulator oil passage 16), and is also discharged from the auxiliary chamber R2 into the suction oil passage 12 via the second simulator oil passage 17. When the pressure in the main chamber R1 reduces to fall below the predetermined pressure, the piston 27a is returned to an initial position due to the biasing force (an elastic force) of the spring 27b. The stroke simulator 27 sucks the brake fluid from the master cylinder 5 in this manner, thereby simulating hydraulic stiffness of the wheel cylinders 8 to imitate a feeling that the driver would have when pressing the pedal.

The ECU 100 forms a hydraulic control unit that actuates the pump unit 7, the electromagnetic valves, and the like based on various kinds of information to control the hydraulic pressures in the wheel cylinders 8. The ECU 100 includes a brake operation amount detection unit 101, a target wheel cylinder hydraulic pressure calculation unit 102, a pressing force brake creation unit 103, a boosting control unit 104, a boosting control switching unit 105, a supplementary pressure increase unit 106, and a brake fluid storage unit 107. The brake operation amount detection unit 101 detects a displacement amount (the pedal stroke) of the brake pedal 2 as the brake operation amount upon receiving the input of the value detected by the stroke sensor 90. The target wheel cylinder hydraulic pressure calculation unit 102 calculates a target wheel cylinder hydraulic pressure. More specifically, the target wheel cylinder hydraulic pressure calculation unit 102 calculates the target wheel cylinder hydraulic pressure that realizes a predetermined boosting rate, i.e., an ideal characteristic about a relationship between the pedal stroke and a brake hydraulic pressure requested by the driver (a vehicle deceleration G requested by the driver), based on the detected pedal stroke. Further, during the regenerative brake control, the target wheel cylinder hydraulic pressure calculation unit 102 calculates the target wheel cylinder hydraulic pressure in relation to the regenerative braking force. More specifically, the target wheel cylinder hydraulic pressure calculation unit 102 calculates such a target wheel cylinder hydraulic pressure that a sum of the regenerative braking force input from a control unit of the regenerative braking apparatus and a hydraulic braking force corresponding to the target wheel cylinder hydraulic pressure can satisfy the vehicle deceleration requested by the driver. During the VDC, the target wheel cylinder hydraulic pressure calculation unit 102 calculates the target wheel cylinder hydraulic pressure for each of the wheels FL to RR so as to, for example, realize a desired state of a vehicle motion, based on a detected amount of the state of the vehicle motion (a lateral acceleration or the like).

The pressing force brake creation unit 103 is configured to prohibit the stroke simulator 27 from functioning by controlling the shut-offs valve 21, the stroke simulator IN valve 31, and the stroke simulator OUT valve 32 in the opening directions, the opening direction, and the closing direction, respectively, thereby realizing the pressing force brake that creates the wheel cylinder hydraulic pressures from the master cylinder pressure. The boosting control unit 104 controls the shut-off valves 21 in the closing directions to thus make the hydraulic control unit 60 ready for the creation of the wheel cylinder hydraulic pressures by the pump unit 7, thereby performing the boosting control. The boosting control unit 104 controls each of the actuators of the hydraulic control unit 60 to realize the target wheel cylinder hydraulic pressures. Further, the boosting control unit 104 closes the stroke simulator IN valve 31 and controls the stroke simulator OUT valve 32 in the opening direction, thereby activating the stroke simulator 27. The boosting control switching unit 105 controls the operation of the master cylinder unit 5 to switch the pressing force brake and the boosting control, based on the calculated target wheel cylinder hydraulic pressure. More specifically, upon detection of a start of the brake operation by the brake operation amount detection unit 101, the boosting control switching unit 105 causes the pressing force brake creation unit 103 to create the wheel cylinder hydraulic pressures if the calculated target wheel cylinder hydraulic pressure is equal to or lower than a predetermined value (for example, corresponding to a maximum value of the vehicle deceleration G that would be generated when the vehicle is normally braked without being suddenly braked). On the other hand, the boosting control switching unit 105 causes the boosting control unit 104 to create the wheel cylinder hydraulic pressures if the target wheel cylinder hydraulic pressure calculated at the time of the operation of pressing the brake exceeds the above-described predetermined value.

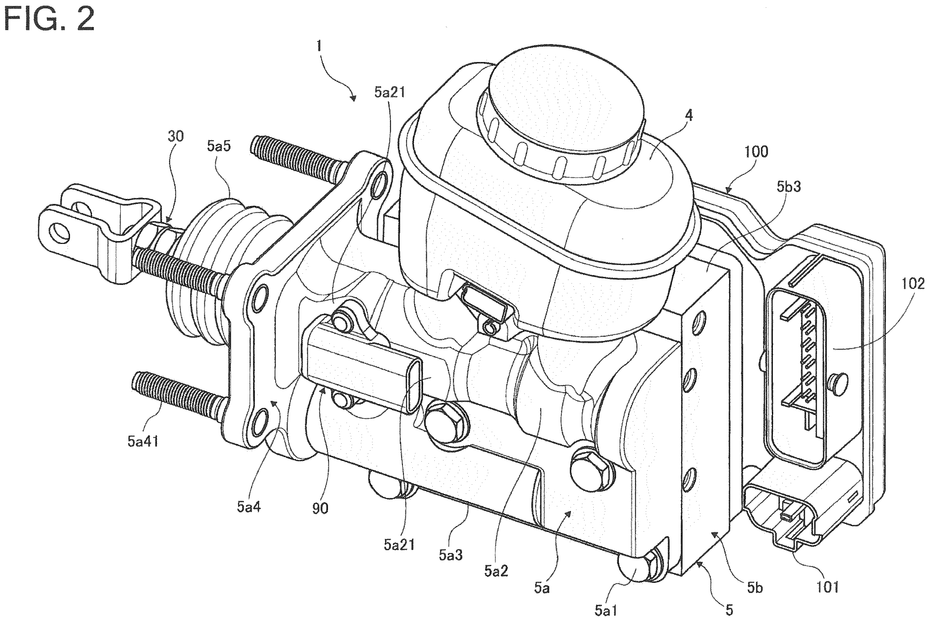

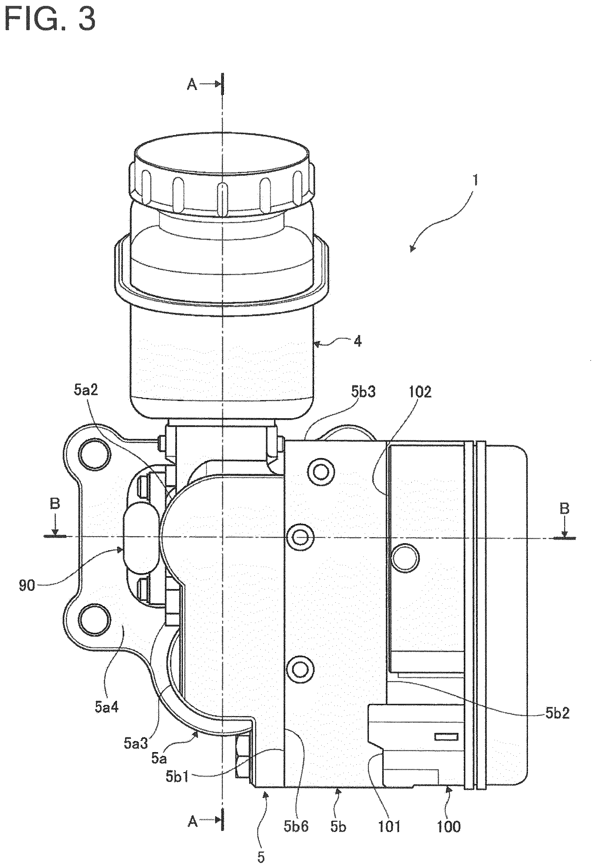

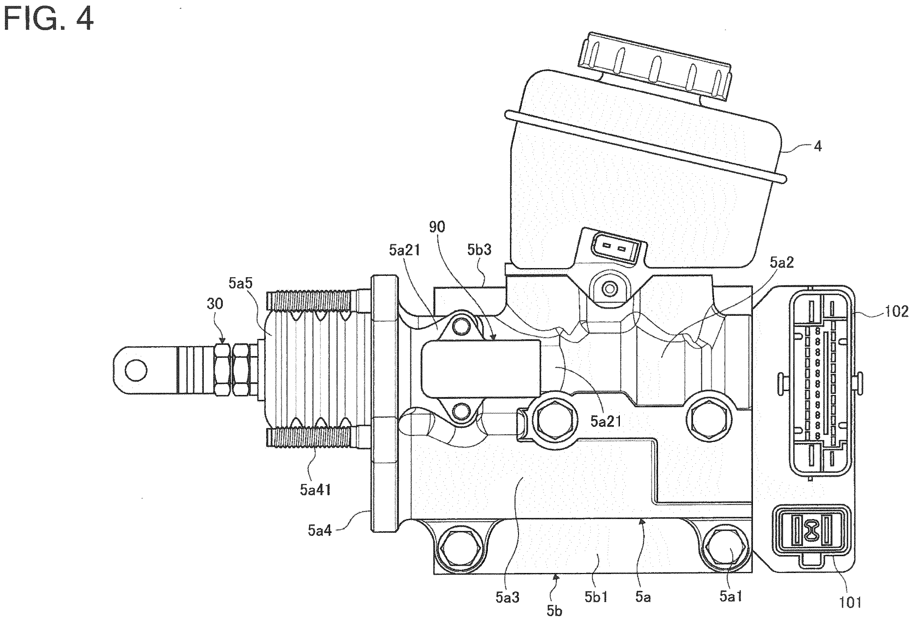

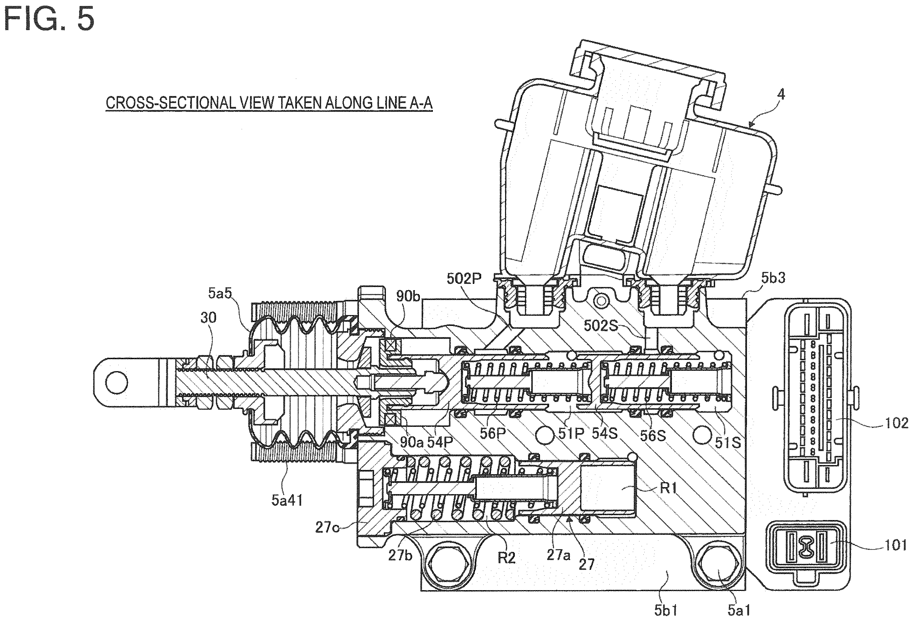

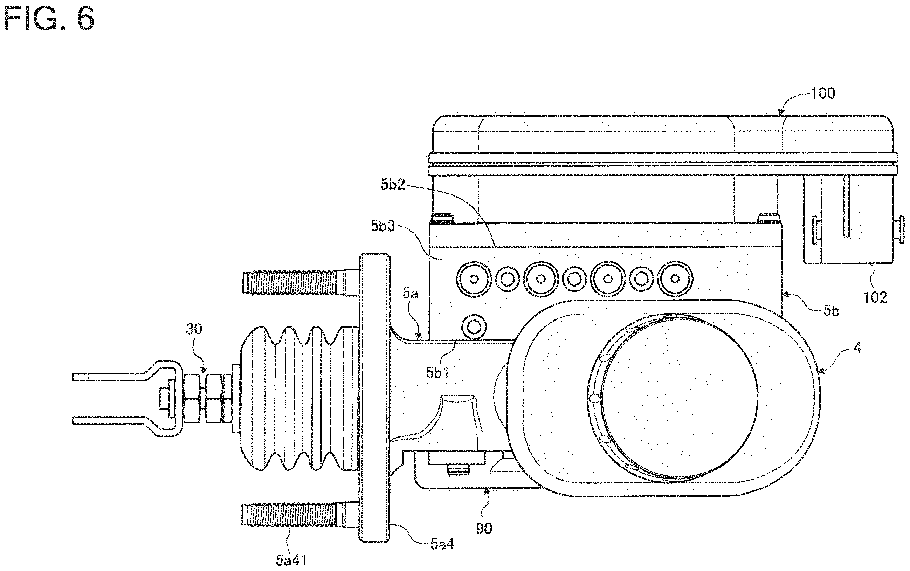

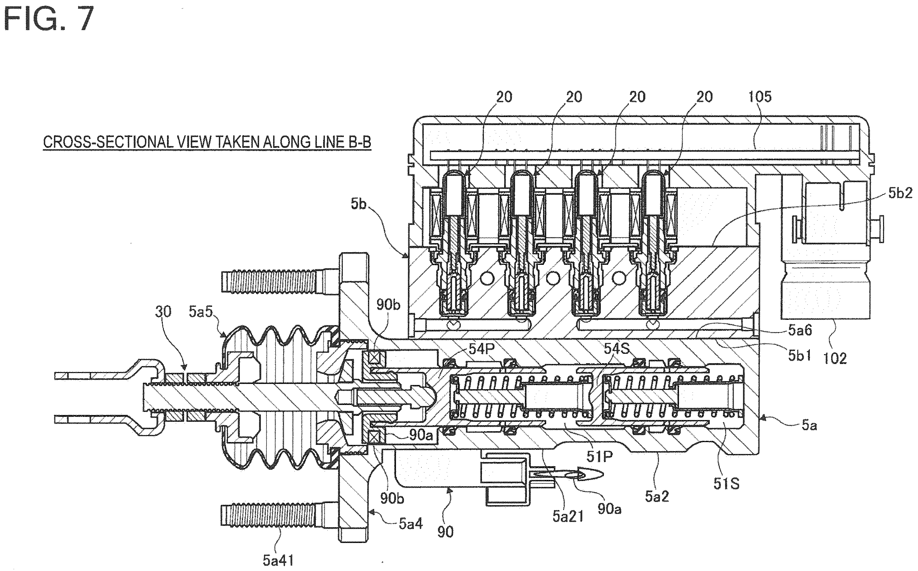

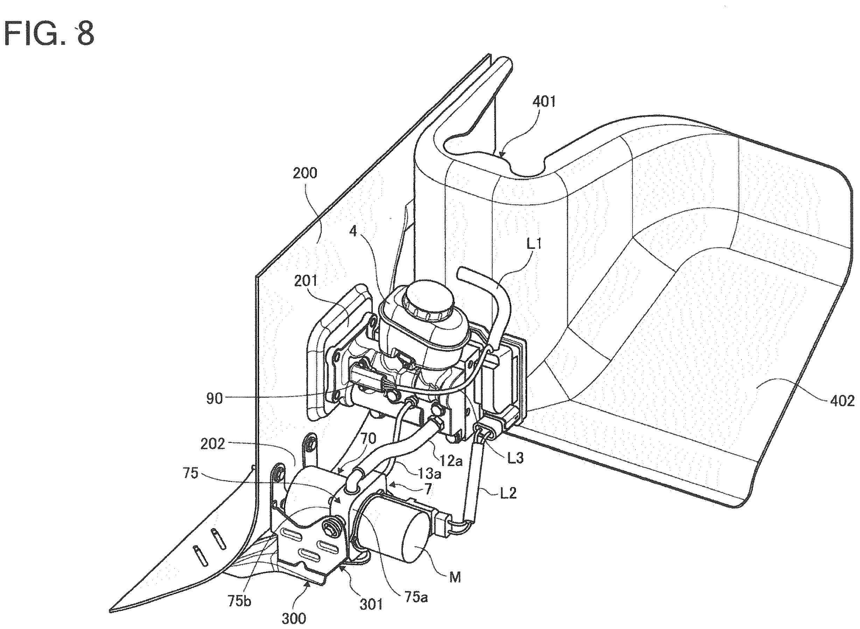

Fig. 2 is a perspective view of the brake apparatus according to the first embodiment. Fig. 3 is a front view illustrating the brake apparatus according to the first embodiment. Fig. 4 is a left side view illustrating the brake apparatus according to the first embodiment. Fig. 5 is a cross-sectional view of the brake apparatus according to the first embodiment, taken along a line A-A. Fig. 6 is a plan view illustrating the brake apparatus according to the first embodiment. Fig. 7 is a cross-sectional view of the brake apparatus according to the first embodiment, taken along a line B-B. The master cylinder unit 5 of the brake apparatus 1 includes a first unit housing 5a, a second unit housing 5b, and the ECU 100. The first unit housing 5a contains the master cylinder mechanism 50 and the stroke simulator 27 therein. The second unit housing 5b contains the various kinds of electromagnetic valves 20, the hydraulic sensors, and the like therein, and also includes a plurality of oil passages formed by piercing the second unit housing 5b. The ECU 100 is used to output a control instruction signal calculated based on various kinds of sensor signals and the like to the various kinds of electromagnetic valves 20. The first unit housing 5a includes a flat first side surface 5a6, which faces the second unit housing 5b. On the other hand, a master cylinder container portion 5a2 and a stroke simulator container portion 5a3 are formed on a surface of the first unit housing 5a located opposite from the first side surface 5a6. The master cylinder container portion 5a2 generally cylindrically bulges toward the opposite side from the second unit housing 5b, and contains the master cylinder mechanism 50 therein. The stroke simulator container portion 5a3 contains the stroke simulator 27 therein. As illustrated in the cross-sectional view of Fig. 5 taken along the line A-A, the stroke simulator 27 is mounted in a cylinder portion formed by piercing the first unit housing 5a, and this cylinder portion is sealingly closed by a plug member 27c. Further, a flange portion 5a4 is formed on one side of the first unit housing 5a that is closer to the push rod 30. The flange portion 5a4 is used to attach the brake apparatus 1 to an installment panel 200 (refer to Fig. 8) of the vehicle. The brake apparatus 1 is attached to the installment panel 200 by attachment bolts 5a41 provided at four corners of the flange portion 5a4. A rubber boot 5a5 is disposed around an outer periphery of the push rod 30. The rubber boot 5a5 prevents entry of dust and the like. Further, the reservoir 4 is mounted on the first unit housing 5a.

A sensor attachment surface 5a21 is formed on the one side of the master cylinder container portion 5a2 where the flange portion 5a4 is located. The sensor attachment surface 5a21 is formed by flatly cutting out the generally cylindrical bulging portion. The stroke sensor 90 is attached on this sensor attachment surface 5a21. Referring to the cross-sectional view of Fig. 7 taken along the line B-B, in the master cylinder mechanism 50 according to the first embodiment, a holder member 90a is attached to the primary piston 54P connected to the push rod 30. A permanent magnet 90b is held around an outer periphery of this holder member 90a. This permanent magnet 90b carries out a stroke while having a predetermined correlation with the pedal stroke amount of the brake pedal 2. A Hall element is contained in the stroke sensor 90, and the stroke sensor 90 detects the stroke amount by detecting a change in a magnetic flux due to the stroke of this permanent magnet 90b with use of the Hall element. It is preferable to position the stroke sensor 90 and the permanent magnet 90b as close to each other as possible to highly accurately detect the change in the magnetic flux. Therefore, the sensor attachment surface 5a21 is formed by cutting out an outer surface of the master cylinder container portion 5a2 to thereby reduce a distance between the stroke sensor 90 and the permanent magnet 90b. The stroke sensor 90 detects the magnetic flux generated from the permanent magnet 90b, which may lead to a risk of a reduction in the detection accuracy if another magnetic flux (for example, a leakage flux from the motor M driving the pump unit 7, or a leakage flux from a coil of the electromagnetic valve 20 or the like) externally exists in the vicinity of the stroke sensor 90. Therefore, in the first embodiment, the brake apparatus 1 is constructed in sufficient consideration of a positional relationship between the stroke sensor 90 and the actuators and the like that might affect the other magnetic flux.

The second unit housing 5b is made of a generally cuboid aluminum block, and includes a first attachment surface 5b1, a second attachment surface 5b2, and an oil passage connection surface 5b3. The first unit housing 5a is attached to the first attachment surface 5b1 with bolts 5a1. The second attachment surface 5b2 is formed at a position opposite from this first attachment surface 5b1. The oil passage connection surface 5b3 is formed between the first attachment surface 5b1 and the second attachment surface 5b2 on one side of the second unit housing 5b that is closer to the reservoir 4. A plurality of oil passages is formed in the second unit housing 5b by piercing the second unit housing 5b. Attachment holes for attaching the various kinds of electromagnetic valves 20 and the hydraulic sensors 91, 92, and 93 are formed on the second attachment surface 5b2 (refer to Fig. 7). The plurality of oil passages are formed on the oil passage connection surface 5b3 by piercing the oil passage connection surface 5b3, to which the pipes leading to the individual wheel cylinders 8 are connected. Further, the coils of the electromagnetic valves 20, and the ECU 100 are attached to the second attachment surface 5b2. The ECU 100 includes a control substrate 105 that calculates a control amount based on the various kinds of sensor signals to output a control instruction.

The ECU 100 includes the control substrate 105, a first connection portion 101, and a second connector portion 102. The control substrate 105 is contained in a case made from a resin material, and a microcomputer and the like are mounted on the control substrate 105. A wiring L2, which outputs a driving signal from the control substrate 105 to the motor M, is connected to the first connector portion 101. The second connector portion 102 connects the control substrate 105 and the stroke sensor 90 via a wiring L3. Further, a CAN communication line L1 (refer to Fig. 8), which transmits and receives information with another controller, is connected to the second connector portion 102. As illustrated in the cross-sectional view of Fig. 7 taken along the line B-B, the stroke sensor 90 and the various kinds of electromagnetic valves 20 are disposed at positions opposite from each other via the second unit housing 5b. This layout prevents or reduces the influence that otherwise might be exerted on the stroke sensor 90, even if the leakage flux occurs according to the power supply to the coils of the electromagnetic valves 20.

Fig. 8 is a perspective view illustrating the brake apparatus 1 according to the first embodiment with this brake apparatus 1 mounted on the vehicle. A brake apparatus attachment portion 201 is formed on the installment panel 200 so as to protrude for the attachment of the brake apparatus 1. This brake apparatus attachment portion 201 is provided at a position in proximity to a body-side member 401 to which a strut mount is attached, and a tire housing 402. The master cylinder unit 5 is attached to the brake apparatus attachment portion 201, and the pump unit 7 is attached on a further lower side and an inner side in a direction along a vehicle width with respect to this master cylinder unit 5 via a support member including a first bracket 300 and a second bracket 301. In other words, the brake apparatus 1 is laid out in such a manner that the master cylinder unit 5 is disposed at a position on an outer side of the vehicle body with respect to the pump unit 7. The position of the brake pedal is basically determined to be in front of a driver's seat, which leaves almost no layout flexibility regarding the position of the master cylinder unit 5. Since there is only a limited space available on the outer side of the vehicle body with respect to the master cylinder unit 5 due to the presence of tire housing 402, the pump unit 7 is disposed on the inner side of the vehicle body with respect to the master cylinder unit 5, thereby ensuring the layout flexibility.

The first bracket 300 extends from a lower portion of a curved surface of the installment panel 200 toward a front side and an upper side of the vehicle. The second bracket 301 has one end fixed to a portion of a generally vertical surface of the installment panel 200, which portion is upper with respect to the first bracket 300 and lower with respect to the master cylinder unit 5, and the other end coupled with the first bracket 300. The pump unit 7 is fixed to the second bracket 301 by a bolt, thereby being fixedly supported by both the first bracket 300 and the second bracket 301. As illustrated in Fig. 8, the master cylinder unit 5 and the pump unit 7 are disposed so as to be spaced apart from each other, and the control substrate 105 and the motor M are electrically connected to each other via the wiring L2 connected to the first connector portion 101. Further, the master cylinder unit 5, and the pump unit 7 and the reservoir 4 are connected to each other so as to be able to transmit and receive the brake fluid via the pipes (the connection pipe 10R, the suction pipe 12a, and the discharge pipe 13a).

The pump unit 7 includes a block-shaped pump housing 75. The motor M is fixed to a first side surface 75a of the pump housing 75, and the gear pump 70 is fixed to a second side surface 75b opposite from the first side surface 75a. The various kinds of pipes, and the bolt for fixing the pump housing 75 to the second bracket 301 are attached to an outer periphery of a body portion connecting the first side surface 75a and the second side surface 75b of the pump housing 75. The pump unit 7 is disposed in such a manner that a direction of a rotational axis of the motor M and a direction of the stroke of the push rod 30 of the master cylinder unit 5 extend generally in parallel with each other. In other words, the pump unit 7 is disposed in such a manner that a direction of a rotational axis of the piston 54 and the direction of the rotational axis of the motor M extend generally in parallel with each other. Further, the motor M is attached on a vehicle front side of the pump housing 75 while the gear pump 70 is attached to one side of the pump housing 75 that is closer to the installment panel 200, which causes the stroke sensor 90 disposed on the one side of the master cylinder unit 5 that is closer to the installment panel 200, and the motor M to be located away from each other in a front-rear direction of the vehicle.

### [Effects of First Embodiment]

In the following description, effects of the brake apparatus described in the first embodiment will be listed.
(1-1) The brake apparatus includes the master cylinder unit 5 and the stroke sensor 90. The master cylinder unit 5 includes therein the piston 54 configured to carry out the stroke via the push rod 30 (a rod) axially actuated according to the operation performed by the driver on the brake pedal, and the oil passage through which the brake fluid flows after flowing out according to the stroke of the piston 54. The stroke sensor 90 is attached to the outer wall of the master cylinder unit 5 and configured to detect the axial stroke amount of the piston 54. Therefore, the master cylinder unit 5 and the stroke sensor 90 are integrated with each other, which improves the mountability of the brake apparatus 1 onto the vehicle body. Further, the stroke sensor 90 is attached to the outer wall of the master cylinder unit 5, which can increase the layout flexibility to achieve the layout capable of preventing the noise, thereby acquiring the detection accuracy of the sensor.
(1-2) In the brake apparatus described in the above-described item (1-1), the master cylinder unit 5 includes the electromagnetic valve 20 configured to establish and block the communication of the oil passage, and the ECU 100 (a control unit) configured to drive the electromagnetic valve 20. The stroke sensor 90 is attached to one side of the master cylinder unit 5 where the master cylinder container portion 5a2 is located (one side-surface side), and the ECU 100 is disposed on the position opposite from the master cylinder container portion 5a2 of the master cylinder unit 5. This configuration allows the stroke sensor 90 and the ECU 100 to be disposed so as to be located away from each other, thereby succeeding in preventing the influence of the noise due to the leakage flux generated from the ECU 100.
(1-3) The above-described brake apparatus listed in the above-described item (1-2) further includes the gear pump 70 configured to suck the brake fluid from the master cylinder unit 5, and the motor M (a motor) configured to drive the gear pump 70. The stroke sensor 90 is the magnetic sensor configured to detect the stroke of the piston 54 based on the magnetic change. The motor M is disposed so as to be located farther away from the stroke sensor 90 than the ECU 100 is. Therefore, the brake apparatus can prevent the influence of the noise due to the leakage flux from the motor M, thereby increasing the detection accuracy of the stroke sensor 90.
(1-4) The brake apparatus described in the above-described item (1-1) further includes the gear pump 70 configured to suck the brake fluid from the master cylinder unit 5, and the motor M (a motor) configured to drive the gear pump 70. The motor M and the gear pump 70 are integrally configured as the pump unit 7 via the pump housing 75. The pump unit 7 is connected to the master cylinder unit 5 via the suction pipe 12a (a suction hose) that sucks the brake fluid from the master cylinder unit 5. Connecting the master cylinder unit 5 and the pump unit 7 via the suction pipe 12a in this manner can increase the flexibility of the layout between the master cylinder unit 5 and the pump unit 7, thereby allowing the stroke sensor 90 to be less affected by the noise.
(1-5) In the brake apparatus described in the above-described item (1-4), the master cylinder unit 5 is configured to achieve such a layout that the master cylinder unit 5 is disposed at the position on the outer side of the vehicle body with respect to the pump unit7. In other words, the brake apparatus is laid out in such a manner that the pump unit 7 is disposed at the position on the inner side of the vehicle body with respect to the master cylinder unit 5. The position of the master cylinder unit 5 is determined by the position where the driver operates the pedal. Therefore, the layout flexibility reduces with the tire housing 402 and the body-side member 401, to which the strut mount is attached, placed at the position on the outer side of the vehicle body with respect to the master cylinder unit 5. Accordingly, the brake apparatus is laid out in such a manner that the master cylinder unit 5 is disposed at the position on the outer side of the vehicle body with respect to the pump unit 7, i.e., the pump unit 7 is disposed at the position on the inner side of the vehicle body with respect to the master cylinder unit 5, which can increase the layout flexibility, thereby allowing the stroke sensor 90 to be less affected by the noise.
(1-11) The brake apparatus includes the master cylinder unit 5 and the stroke sensor 90. The master cylinder unit 5 includes the first unit housing 5a and the second unit housing 5b (a housing) including the piston 54 configured to carry out the stroke via the push rod 30 axially actuated according to the operation performed by the driver on the brake pedal in the cylinder formed in the housing, and including therein the oil passage through which the brake fluid flows after flowing out according to the stroke of the piston 54, the electromagnetic valve 20 disposed on the second attachment surface 5b2 (one side surface) of the second unit housing 5b and configured to establish and block the communication of the oil passage, and the ECU 100 disposed on one side of the second unit housing 5b where the second attachment surface 5b2 is located and configured to drive the electromagnetic valve 20. The stroke sensor 90 is attached to the outer wall of the sensor attachment surface 5a21 (another side surface) of the first unit housing 5a opposite from the first attachment surface 5b1 of the second unit housing 5b, and is configured to detect the axial stroke amount of the piston 54. Therefore, the master cylinder unit 5 and the stroke sensor 90 are integrated with each other, which improves the mountability of the brake apparatus 1 onto the vehicle body. Further, the stroke sensor 90 is attached to the outer wall of the master cylinder unit 5, which can increase the layout flexibility to achieve the layout capable of preventing the noise, thereby acquiring the detection accuracy of the sensor. Further, the stroke sensor 90 is disposed on the sensor attachment surface 5a21 of the first unit housing 5a located away from the second attachment surface 5b2 of the second unit housing 5b with the electromagnetic valve 20 mounted thereon, which can prevent the influence of the noise due to the leakage flux from the electromagnetic valve 20, thereby contributing to the acquisition of the detection accuracy of the sensor.
(1-12) The brake apparatus described in the above-described item (1-11) further includes the gear pump 70 configured to suck the brake fluid from the master cylinder unit 5, and the motor M configured to drive the gear pump 70. The stroke sensor 90 is the magnetic sensor configured to detect the stroke of the piston 54 based on the magnetic change. The stroke sensor 90is arranged in such a manner that the distance between the motor M and the stroke sensor 90 is longer than the distance between the ECU 100 and the stroke sensor 90. In other words, the distance between the motor M, which might exert a larger influence than the electromagnetic valve 20 does as the influence of the leakage flux, and the stroke sensor 90 is longer than the distance between the stroke sensor 90 and the electromagnetic valve 20. This layout can further effectively prevent the noise.
(1-14) In the brake apparatus described in the above-described item (1-13), the master cylinder unit 5 is configured to achieve such a layout that the master cylinder unit 5 is disposed at the position on the outer side of the vehicle body with respect to the pump unit 7. In other words, the brake apparatus is laid out in such a manner that the pump unit 7 is disposed at the position on the inner side of the vehicle body with respect to the master cylinder unit 5. The position of the master cylinder unit 5 is determined by the position where the driver operates the pedal. Therefore, the layout flexibility reduces with the tire housing 402 and the body-side member 401, to which the strut mount is attached, placed at the position on the outer side of the vehicle body with respect to the master cylinder unit 5. Accordingly, the brake apparatus is laid out in such a manner that the master cylinder unit 5 is disposed at the position on the outer side of the vehicle body with respect to the pump unit 7, i.e., the pump unit 7 is disposed at the position on the inner side of the vehicle body with respect to the master cylinder unit 5, which can increase the layout flexibility, thereby allowing the stroke sensor 90 to be less affected by the noise.
(1-18) The brake apparatus includes the master cylinder unit 5, the stroke sensor 90, the gear pump 70, and the motor M. The master cylinder unit 5 includes the first and second unit housings 5a and 5b including the piston 54 configured to carry out the stroke via the push rod 30 axially actuated according to the operation performed by the driver on the brake pedal in the cylinder formed in the housing, and including therein the oil passage through which the brake fluid flows after flowing out according to the stroke of the piston 54, the electromagnetic valve 20 disposed on the second attachment surface 5b2 of the second unit housing 5b and configured to establish and block the communication of the oil passage, and the ECU 100 disposed on the one side of the second unit housing 5b where the second attachment surface 5b2 is located and configured to drive the electromagnetic valve 20. The stroke sensor 90 is attached to the outer wall of the sensor attachment surface 5a21 (another side surface) of the first unit housing 5a opposite from the first attachment surface 5b1 of the second unit housing 5b, and is configured to detect the stroke of the piston 54 based on the magnetic change. The gear pump 70 is configured to suck the brake fluid from the master cylinder unit 5. The motor M is configured to drive the gear pump 70. Therefore, the master cylinder unit 5 and the stroke sensor 90 are integrated with each other, which improves the mountability of the brake apparatus 1 onto the vehicle body. Further, the stroke sensor 90 is attached to the outer wall of the master cylinder unit 5, which can increase the layout flexibility to achieve the layout capable of preventing the noise, thereby acquiring the detection accuracy of the sensor. Further, the stroke sensor 90 is disposed on the sensor attachment surface 5a21 of the first unit housing 5a located away from the second attachment surface 5b2 of the second unit housing 5b with the electromagnetic valves 20 mounted thereon, which can prevent the influence of the noise due to the leakage flux from the electromagnetic valve 20, thereby contributing to the acquisition of the detection accuracy of the sensor.
(1-19) In the brake apparatus described in the above-described item (1-18), the stroke sensor 90 is disposed at the position closer to the ECU 100 than to the motor M. Therefore, the brake apparatus can prevent the influence of the noise due to the leakage flux from the motor M, thereby increasing the detection accuracy of the stroke sensor 90.
(1-20) In the brake apparatus described in the above-described item (1-11), the motor M and the gear pump 70 are integrally configured as the pump unit 7 via the pump housing 75. The pump unit 7 is connected to the master cylinder unit 5 via the suction pipe 12a (the suction hose) that sucks the brake fluid from the master cylinder unit 5. Connecting the master cylinder unit 5 and the pump unit 7 via the suction pipe 12a in this manner can increase the flexibility of the layout between the master cylinder unit 5 and the pump unit 7, thereby allowing the stroke sensor 90 to be less affected by the noise.

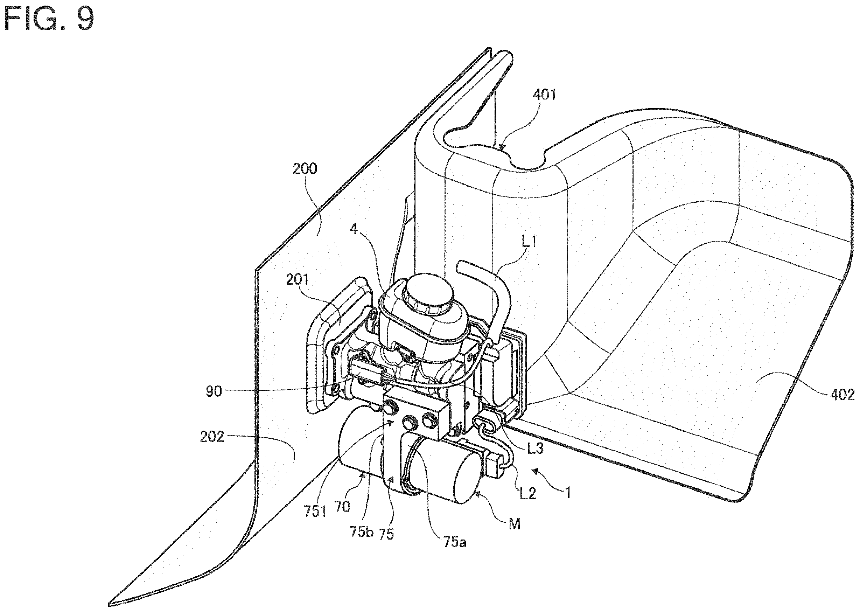

[Second Embodiment] Next, a second embodiment will be described. The second embodiment has a basic configuration similar to the first embodiment, and therefore will be described focusing on only differences from the first embodiment. Fig. 9 is a perspective view illustrating a brake apparatus according to the second embodiment with this brake apparatus mounted on a vehicle. In the first embodiment, the pump unit 7 is supported to the installment panel 200 via the first and second brackets 300 and 301. On the other hand, in the second embodiment, a bracket portion 751 is formed in the pump housing 75, and the pump housing 75 is attached by being directly fixed by bolts to a lower side of the master cylinder unit 5 where the master cylinder container portion 5a2 is located, in terms of which the second embodiment is different from the first embodiment. In this manner, the pump unit 7 is fixed to the portion of the first unit housing 5a of the master cylinder unit 5, which is located on the inner side of the vehicle body and is on one side closer to the master cylinder container portion 5a2, which allows the pump unit 7 to be positioned on the inner side of the vehicle body with respect to the master cylinder unit 5, thereby increasing the layout flexibility. Further, an oil passage connecting the oil passage in the pump unit 7 and the oil passage in the master cylinder unit 5 is formed inside the bracket unit 751, which allows the brake apparatus to omit the bracket and also omit the various kinds of pipes (the connection pipe 10R, the suction pipe 12a, and the discharge pipe 13a) along therewith, thereby improving the mountability.

Further, in the first embodiment, the brake apparatus 1 is held only at the master cylinder unit 5 on the brake apparatus attachment portion 201 of the installment panel 200. On the other hand, in the second embodiment, the master cylinder unit 5 and the pump unit 7 are integrated with each other, which allows the brake apparatus 1 to be fixedly supported by the brake apparatus attachment portion 201. This configuration improves the mountability onto the vehicle. Further, the pump unit 7, which becomes a source of generating a vibration when being driven by the motor M, is indirectly attached to the installment panel 200 via the master cylinder unit 5 without being directly attached to the installment panel 200, which can damp the vibration to thereby improve a noise and vibration performance.

In the following description, effects of the brake apparatus described in the second embodiment will be listed.
(2-6) In the brake apparatus described in the above-described item (1-4), the pump unit 7 is fixed integrally with the master cylinder unit 5. This configuration can improve the mountability of the brake apparatus 1 onto the vehicle.
(2-7) In the brake apparatus described in the above-described item (2-6), the master cylinder unit 5 is configured to achieve such a layout that the master cylinder unit 5 is disposed on the position on the outer side of the vehicle body with respect to the pump unit7. In other words, the brake apparatus is laid out in such a manner that the master cylinder unit 5 is disposed at the position on the outer side of the vehicle body with respect to the pump unit 7, i.e., the pump unit 7 is disposed at the position on the inner side of the vehicle body with respect to the master cylinder unit 5, which can increase the layout flexibility, thereby allowing the stroke sensor 90 to be less affected by the noise.
(2-8) In the brake apparatus described in the above-described item (2-6), the stroke sensor 90 is disposed on one side closer to the brake pedal so as to detect the stroke of the push rod 30. The motor M is a rotational device. The pump unit 7 and the master cylinder unit 5 are integrally fixed in such a manner that the direction of the rotational axis of the motor M and the gear pump 70 matches the direction of the rotational axis of the piston 54, and that the gear pump 70 is located closer to the stroke sensor 90 than the motor M is. This configuration can improve the mountability onto the vehicle while increasing the distance between the stroke sensor 90 and the motor M.
(2-9) In the brake apparatus described in the above-described item (2-6), the attachment surface of the master cylinder unit 5 is attached to the installment panel 200 of the vehicle body. Therefore, the pump unit 7 can be indirectly attached to the installment panel 200, which can improve the noise and vibration performance.
(2-10) In the brake apparatus described in the above-described item (2-8), the motor M is a rotational device. The pump unit 7 and the master cylinder unit 5 are integrally fixed in such a manner that the direction of the rotational axis of the motor M and the gear pump 70 matches the direction of the rotational axis of the piston 54. This configuration makes it difficult to transmit an influence of, for example, the vibration generated from the rotational motions of the motor M and the piston 54 to the installment panel 200, thereby contributing to the improvement of the noise and vibration performance.
(2-13) In the brake apparatus described in the above-described item (1-11), the motor M and the gear pump 70 are integrally configured as the pump unit 7 via the pump housing 75. The pump unit 7 is fixed integrally with the master cylinder unit 5. The master cylinder unit 5 and the pump unit 7 are integrated with each other in this manner, which can improve the mountability onto the vehicle, and can further improve the mountability by omitting the pipes.
(2-16) In the brake apparatus described in the above-described item (2-11), the attachment surface of the master cylinder unit 5 is attached to the installment panel 200 of the vehicle body. Therefore, the pump unit 7 can be indirectly attached to the installment panel 200, which can improve the noise and vibration performance.
(2-17) In the brake apparatus described in the above-described item (2-16), the motor M is a rotational device. The pump unit 7 and the master cylinder unit 5 are integrally fixed in such a manner that the direction of the rotational axis of the motor M and the gear pump 70 matches the direction of the rotational axis of the piston 54. This configuration makes it difficult to transmit the influence of, for example, the vibration generated from the rotational motions of the motor M and the piston 54 to the installment panel 200, thereby contributing to the improvement of the noise and vibration performance.
(2-21) In the brake apparatus described in the above-described item (2-15), the master cylinder unit 5 is configured to achieve such a layout that the master cylinder unit 5 is disposed on the position on the outer side of the vehicle body with respect to the pump unit7. In other words, the brake apparatus is laid out in such a manner that the pump unit 7 is disposed at the position on the inner side of the vehicle body with respect to the master cylinder unit 5. The position of the master cylinder unit 5 is determined by the position where the driver operates the pedal. Therefore, the layout flexibility reduces with the tire housing 402 and the body-side member 401, to which the strut mount is attached, placed at the position on the outer side of the vehicle body with respect to the master cylinder unit 5. Accordingly, the brake apparatus is laid out in such a manner that the master cylinder unit 5 is disposed at the position on the outer side of the vehicle body with respect to the pump unit 7, i.e., the pump unit 7 is disposed at the position on the inner side of the vehicle body with respect to the master cylinder unit 5, which can increase the layout flexibility, thereby allowing the stroke sensor 90 to be less affected by the noise.

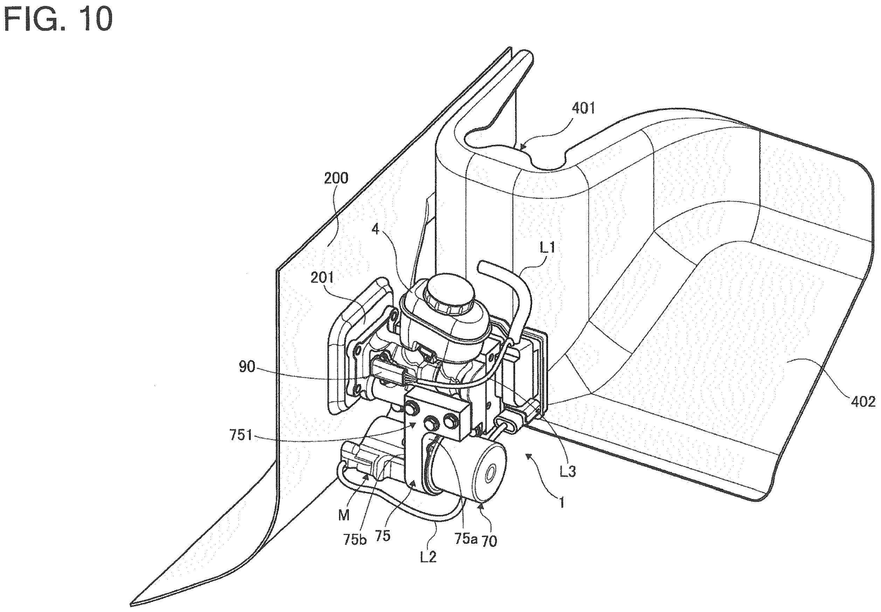

Having described the present invention based on the first and second embodiments, the present invention is not limited to the above-described configurations, and also includes another configuration. Fig. 10 illustrates a modification of the second embodiment. The first and second embodiments have been described as the configuration in which the motor M is fixed to the first side surface 75a of the pump housing 75, and the gear pump 70 is fixed to the second side surface 75b opposite from the first side surface 75a. However, as illustrated in Fig. 10, the brake apparatus may be configured in such a manner that the gear pump 70 is attached to the first side surface 75a, and the motor M is fixed to the second side surface 75b opposite from the first side surface 75b.

### REFERENCE SIGNS LIST

- 1: brake apparatus
- 2: brake pedal
- 3: link mechanism
- 4: reservoir
- 5: master cylinder unit
- 5a: first unit housing
- 5a2: master cylinder container portion
- 7: pump unit
- 8: wheel cylinder
- 12a: suction pipe
- 20: electromagnetic valve
- 27: stroke simulator
- 30: push rod
- 31: stroke simulator IN valve
- 32: stroke simulator OUT valve
- 50: master cylinder mechanism
- 54: piston
- 60: hydraulic control unit
- 70: gear pump
- 75: pump housing
- 90: stroke sensor
- 90a: holder member
- 90b: permanent magnet
- 200: installment panel
- M: motor

## Claims

1. A brake apparatus (1) comprising:
a master cylinder unit (5) including
a housing (5a, 5b) including a piston (54P, 54S) configured to carry out a stroke via a rod (30) axially actuated according to an operation performed by a driver on a brake pedal (2) in a cylinder formed in the housing (5a, 5b), and including therein an oil passage (11P, 11S) through which brake fluid flows after flowing out according to the stroke of the piston (54P, 54S),
an electromagnetic valve (20) disposed on one side surface of the housing (5a, 5b), and configured to establish and block communication of the oil passage (11P, 11S), and a control unit (100) disposed on one side of the housing (5a, 5b) where the one side surface is located, and configured to drive the electromagnetic valve (20); and
a stroke sensor (90) attached to an outer wall of another side surface of the housing (5a, 5b) opposite from the one side surface, and configured to detect an axial stroke amount of the piston (54P, 54S).

2. The brake apparatus (1) according to claim 1, further comprising:
a pump (70) configured to suck the brake fluid from the master cylinder unit (5); and
a motor (M) configured to drive the pump (70),
wherein the stroke sensor (90) is a magnetic sensor configured to detect the stroke of the piston (54P, 54S) based on a magnetic change, and
wherein the stroke sensor (90) is arranged in such a manner that a distance between the motor (M) and the stroke sensor (90) is longer than a distance between the control unit (100) and the stroke sensor (90).

3. The brake apparatus (1) according to claim 2, wherein the motor (M) and the pump (70) are integrally configured as a pump unit (7) via a pump housing (75), and wherein the pump unit (7) is fixed integrally with the master cylinder unit (5).

4. The brake apparatus (1) according to claim 3, wherein the master cylinder unit (5) is configured to achieve such a layout that the master cylinder unit (5) is disposed at a position on an outer side of a vehicle body with respect to the pump unit (7).

5. The brake apparatus (1) according to claim 2, wherein the stroke sensor (90) is disposed on one side closer to the brake pedal (2) so as to detect the stroke of the rod (30),
wherein the motor (M) is a rotational device, and
wherein the pump unit (7) and the master cylinder unit (5) are integrally fixed in such a manner that a direction of a rotational axis of the motor (M) and the pump (70) matches a direction of an axis of the piston (54P, 54S), and that the pump (70) is located closer to the stroke sensor (90) than the motor (M) is.

6. The brake apparatus (1) according to claim 1, wherein an attachment surface (5a4) of the master cylinder unit (5) is attached to an installment panel (200) of a vehicle body.

7. The brake apparatus (1) according to claim 2, wherein the motor (M) is a rotational device, and
wherein the pump unit (7) and the master cylinder unit (5) are integrally fixed in such a manner that a direction of a rotational axis of the motor (M) and the pump (70) matches a direction of an axis of the piston (54P, 54S).

8. The brake apparatus (1) according to claim 1, further comprising:
a pump (70) configured to suck the brake fluid from the master cylinder unit (5); and
a motor (M) configured to drive the pump (70).

9. The brake apparatus according to claim 8, wherein the stroke sensor (90) is disposed at a position closer to the control unit (100) than to the motor (M).

## Patentansprüche

1. Bremsvorrichtung (1), die umfasst:
eine Hauptzylinder-Einheit (5), die enthält:
ein Gehäuse (5a, 5b), das einen Kolben (54P, 54S) enthält, der so eingerichtet ist, dass er einen Hub über eine Stange (30) ausführt, die entsprechend einer von einem Fahrer an einem Bremspedal (2) durchgeführten Betätigung in einem in dem Gehäuse (5a, 5b) ausgebildeten Zylinder axial in Bewegung gesetzt wird, und einen Ölkanal (11P, 11S) darin enthält, durch den Bremsflüssigkeit nach Ausströmen entsprechend dem Hub des Kolbens (54P, 54S) strömt,
ein elektromagnetisches Ventil (20), das an einer Seitenfläche des Gehäuses (5a, 5b) angeordnet und so eingerichtet ist, dass es Verbindung des Ölkanals (11P, 11S) herstellt und blockiert, sowie
eine Steuerungs-Einheit (100), die an einer Seite des Gehäuses (5a, 5b) angeordnet ist, an der sich die eine Seitenfläche befindet, und so eingerichtet ist, dass sie das elektromagnetische Ventil (20) ansteuert; sowie
einen Hub-Sensor (90), der an einer Außenwand einer anderen Seitenfläche des Gehäuses (5a, 5b) gegenüber der einen Seitenfläche angebracht und so eingerichtet ist, dass er ein Maß axialen Hubs des Kolbens (54P, 54S) erfasst.

2. Bremsvorrichtung (1) nach Anspruch 1, die des Weiteren umfasst:
eine Pumpe (70), die so eingerichtet ist, dass sie die Bremsflüssigkeit aus der Hauptzylinder-Einheit (5) ansaugt; sowie
einen Motor (M), der so eingerichtet ist, dass er die Pumpe (70) antreibt,
wobei der Hub-Sensor (90) ein magnetischer Sensor ist, der so eingerichtet ist, dass er den Hub des Kolbens (54P, 54S) auf Basis einer magnetischen Änderung erfasst, und
der Hub-Sensor (90) so angeordnet ist, dass ein Abstand zwischen dem Motor (M) und dem Hub-Sensor (90) länger ist als ein Abstand zwischen der Steuerungs-Einheit (100) und dem Hub-Sensor (90).

3. Bremsvorrichtung (1) nach Anspruch 2, wobei der Motor (M) und die Pumpe (70) über ein Pumpengehäuse (75) integral als eine Pumpen-Einheit (7) ausgeführt sind, und
die Pumpen-Einheit (7) integral mit der Hauptzylinder-Einheit (5) befestigt ist.

4. Bremsvorrichtung (1) nach Anspruch 3, wobei die Hauptzylinder-Einheit (5) so eingerichtet ist, dass eine Konstruktion entsteht, bei der die Hauptzylinder-Einheit (5) an einer Position an einer Außenseite einer Fahrzeugkarosserie in Bezug auf die Pumpen-Einheit (7) angeordnet ist.

5. Bremsvorrichtung (1) nach Anspruch 2, wobei der Hub-Sensor (90) an einer Seite angeordnet ist, die näher an dem Bremspedal (2) liegt, um den Hub der Stange (30) zu erfassen,
der Motor (M) eine rotierende Einrichtung ist, und
die Pumpen-Einheit (7) sowie die Hauptzylinder-Einheit (5) integral so befestigt sind, dass eine Richtung einer Drehachse des Motors (M) und der Pumpe (70) einer Richtung einer Achse des Kolbens (54P, 54S) entspricht, und dass die Pumpe (70) sich näher an dem Hubsensor (90) befindet als der Motor (M).

6. Bremsvorrichtung (1) nach Anspruch 1, wobei eine Anbringungsfläche (5a4) der Hauptzylinder-Einheit (5) an einer Installationsplatte (200) einer Fahrzeugkarosserie angebracht ist.

7. Bremsvorrichtung (1) nach Anspruch 2, wobei der Motor (11) eine rotierende Einrichtung ist, und
die Pumpen-Einheit (7) sowie die Hauptzylinder-Einheit (5) integral so befestigt sind, dass eine Richtung einer Drehachse des Motors (M) und der Pumpe (70) einer Richtung einer Achse des Kolbens (54P, 54S) entspricht.

8. Bremsvorrichtung (1) nach Anspruch 1, die des Weiteren umfasst:
eine Pumpe (70), die so eingerichtet ist, dass sie die Bremsflüssigkeit aus der Hauptzylinder-Einheit (5) ansaugt; sowie
einen Motor (M), der so eingerichtet ist, dass er die Pumpe (70) antreibt.

9. Bremsvorrichtung nach Anspruch 8, wobei der Hub-Sensor (90) an einer Position angeordnet ist, die näher an der Steuerungs-Einheit (100) liegt als an dem Motor (M).

## Revendications

1. Dispositif de frein (1) comprenant :
une unité formant maître cylindre (5) incluant :
un carter (5a, 5b) incluant un piston (54P, 54S) configuré pour effectuer une course par l'intermédiaire d'une bielle (30) actionnée axialement en fonction d'une manœuvre effectuée par un conducteur sur une pédale de frein (2) dans un cylindre formé dans le carter (5a, 5b), et incluant un passage d'huile (11P, 11S) au travers duquel s'écoule le liquide de frein après s'être échappé en fonction de la course du piston (54P, 54S),
une soupape électromagnétique (20) disposée sur une première surface latérale du carter (5a, 5b) et configurée pour établir et bloquer la transmission du passage d'huile (11P, 11S), et
une unité de commande (100) disposée sur un côté du carter (5a, 5b) où se situe la première surface latérale et configurée pour piloter la soupape électromagnétique (20), et
un détecteur de course (90) fixé sur une paroi externe d'une autre surface latérale du carter (5a, 5b) opposée à la première surface latérale, et configuré pour détecter la valeur de la course axiale du piston (54P, 54S).

2. Dispositif de frein (1) selon la revendication 1, comprenant en outre :
une pompe (70) configurée pour aspirer le liquide de frein de l'unité formant maître cylindre (5), et
un moteur (M) configuré pour entraîner la pompe (70),
dans lequel le détecteur de course (90) est un capteur magnétique configuré pour détecter la course du piston (54P, 54S) sur la base d'une modification magnétique, et
dans lequel le détecteur de course (90) est agencé de telle sorte que la distance entre le moteur (M) et le détecteur de course (90) est plus longue que la distance entre l'unité de commande (100) et le détecteur de course (90) .

3. Dispositif de frein (1) selon la revendication 2, dans lequel le moteur (M) et la pompe (70) sont configurés en une seule pièce sous la forme d'une unité de pompe (7) par l'intermédiaire d'un carter de pompe (75), et
dans lequel l'unité de pompe (7) est fixée solidairement avec l'unité formant maître cylindre (5).

4. Dispositif de frein (1) selon la revendication 3, dans lequel l'unité formant maître cylindre (5) est configurée pour définir une disposition telle que l'unité formant maître cylindre (5) est disposée à une position sur le côté externe de la carcasse du véhicule par rapport à l'unité de pompe (7).

5. Dispositif de frein (1) selon la revendication 2, dans lequel le détecteur de course (90) est disposé sur un premier côté plus proche de la pédale de frein (2) de sorte à détecter la course de la bielle (30),
dans lequel le moteur (M) est un dispositif en rotation, et
dans lequel l'unité de pompe (7) et l'unité formant maître cylindre (5) sont fixées solidairement de manière à ce que la direction de l'axe de rotation du moteur (M) et de la pompe (70) correspondent à la direction de l'axe du piston (54P, 54S), et à ce que la pompe (70) soit plus proche du détecteur de course (90) que ne l'est le moteur (M).

6. Dispositif de frein (1) selon la revendication 1, dans lequel la surface de fixation (5a4) de l'unité formant maître cylindre (5) est fixée au panneau d'installation (200) de la carcasse du véhicule.

7. Dispositif de frein (1) selon la revendication 2, dans lequel le moteur (M) est un dispositif en rotation, et
dans lequel l'unité de pompe (7) et l'unité formant maître cylindre (5) sont fixées solidairement de manière à ce que la direction de l'axe de rotation du moteur (M) et de la pompe (70) corresponde à la direction de l'axe du piston (54P, 54S) .

8. Dispositif de frein (1) selon la revendication 1, comprenant en outre :
une pompe (70) configurée pour aspirer le liquide de frein de l'unité formant maître cylindre (5), et
un moteur (M) configuré pour entraîner la pompe (70).

9. Dispositif de frein selon la revendication 8, dans lequel le détecteur de course (90) est disposé à une position plus rapprochée de l'unité de commande (100) que du moteur (M) .
